# EUROPÄISCHE PATENTSCHRIFT

(11) **EP 2 722 153 B1**
(45) Veröffentlichungstag und Bekanntmachung des Hinweises auf die Patenterteilung: **02.08.2017**
(21) Anmeldenummer: 13189233.3
(22) Anmeldetag: 18.10.2013
(51) Int. Cl.: B29C 49/78

(54) **Blasmaschine und Verfahren mit variablem Zwischendruckniveau**
Blowing machine and process with variable intermediate pressure level
Machine et procédé de soufflage à niveau de pression intermédiaire variable

(30) Priorität: 19.10.2012 DE 102012110023
(43) Veröffentlichungstag der Anmeldung: 23.04.2014
(73) Patentinhaber: Krones AG, 93073 Neutraubling (DE)
(72) Erfinder: Asbrand, Helmut, 93073 Neutraubling (DE); Lappe, Ulrich, 93073 Neutraubling (DE); Apfelbacher, Oliver, 93073 Neutraubling (DE); Dachs, Alexander, 93073 Neutraubling (DE)
(74) Vertreter: Bittner, Bernhard

(56) Entgegenhaltungen:
- EP-A2- 1 905 569
- EP-A2- 1 974 892
- EP-A2- 2 298 534
- WO-A2-2009/004472
- DE-A1-102004 014 653
- DE-A1-102011 110 962
- DE-B3-102004 041 973
- US-A1- 2008 191 394

## Beschreibung

Die vorliegende Erfindung bezieht sich auf ein Verfahren und eine Vorrichtung zum Umformen von Kunststoffvorformlingen zu Kunststoffbehältnissen. Derartige Vorrichtungen sind aus dem Stand der Technik seit langem bekannt.

In jüngerer Zeit ist es dabei auch bekannt, dass derartige Blasmaschinen und insbesondere Streckblasmaschinen mit Luftrecyclingsystemen ausgestattet sind. Dabei ist es denkbar, dass Kunststoffvorformlinge zu ihrer Expansion mit unterschiedlichen Druckniveaus beaufschlagt werden und auf diese Weise gegebenenfalls Druckluft wieder zurückgewonnen werden kann. Eine derzeit aktuelle Maschine der Anmelderin weist dabei zwei Druckkanäle auf, die recycelbar sind. Hierbei handelt es sich um einen Druckkanal, der einen Vorblasdruck zur Verfügung stellt und einen Druckkanal, der einen Zwischenblasdruck zur Verfügung stellt. Insbesondere die Höhe des sogenannten Zwischenblasens beeinflusst den Luftverbrauch deutlich, wobei jedoch eine Vorhersage eines idealen Luftverbrauches nur schwer möglich ist.

Die DE 10 2004 041 973 B3 beschreibt ein Luftrecycling in einem Blasformprozess. Dabei wird nach einer Übergangsphase eine Entlüftung des Behältnisses gegenüber einem Umgebungsdruck durchgeführt und eine Drucksteuerung in der Niederluftdruckversorgung erfolgt durch eine Variation der Dauer dieser Übergangsphase. Es hat sich jedoch gezeigt, dass bei diesem Verfahren noch nicht das volle Potenzial einer möglichen Einsparung ausgeschöpft wurde. Die Druckschriften EP2298534 A2, US 2008/191394 A1, EP1974892 A2, DE102011110962 A1, DE102004014653 A1, EP1905569 A2 und DE102004041973 B3 offenbaren Verfahren und Vorrichtungen nach den Oberbegriffen der unabhängigen Ansprüchen. Der vorliegenden Erfindung liegt daher die Aufgabe zugrunde, den Druckverbrauch für derartige Blasmaschinen noch weiter zu verbessern.

Dies wird erfindungsgemäß durch ein Verfahren und eine Vorrichtung nach den unabhängigen Ansprüchen erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen werden Kunststoffvorformlinge in eine Blasform bzw. jeweils in Blasformen eingebracht und durch Beaufschlagung mit einem gasförmigen Medium in der Blasform zu den Kunststoffflaschen bzw. Kunststoffbehältnissen expandiert. Dabei erfolgt zunächst ein Vorblasen durch Beaufschlagen der Kunststoffvorformlinge mit einem ersten Druck. Anschließend erfolgt ein Zwischenblasen der Kunststoffvorformlinge mit einem zweiten Druck, der höher ist als der erste Druck. Schließlich erfolgt ein Fertigblasen der Kunststoffvorformlinge mit einem dritten Druck, der höher ist als der zweite Druck. Erfindungsgemäß wird wenigstens der zweite Druck während eines Arbeitsbetriebs variiert. Während, wie oben erwähnt, das Vorblasen einen großen Einfluss auf die Behältnisqualität hat, konnte ermittelt werden, dass der Zwischenblasdruck überwiegend dazu dient, den Luftverbrauch zu senken. Daher wurde ermittelt, dass eine Variation des Zwischenblasdruckes keinen so erheblichen Einfluss auf die Flaschenqualität hat. Die Druckkanäle des Vorblasens und des Zwischenblasens werden dabei, je nach Druckniveau der einzelnen Ringkanäle, bevorzugt selbst eingeregelt. Bislang mussten die Randbedingungen bzw. das Druckniveau von einem Bediener selbst eingegeben werden.

Die Höhe des Zwischenblasdruckes beeinflusst den Luftverbrauch deutlich, wobei eine Vorhersage des Optimums stark prozessabhängig ist und bislang nicht zuverlässig vorausgesagt werden konnte. Dabei wird wenigstens der zweite Druck während eines Arbeitsbetriebes wenigstens in Abhängigkeit von einem Verbrauch geregelt.

Im Gegensatz zum Stand der Technik erfolgt daher keine (bzw. eine nur benutzerseitige feste) Einstellung des Zwischenblasdruckes, sondern im Rahmen beispielsweise eines Optimierungsbetriebes kann dieser Zwischenblasdruck, d.h. hier der zweite Druck, eingeregelt werden. Nach dem Stand der Technik hingegen wird eine derartige optimale Einstellung für den Recyclingprozess schwer gefunden und dies wird auch von vielen Bedienern nicht beherrscht, so dass viele Streckblasmaschinen mit einem deutlich zu hohen Luftverbrauch produzieren.

Eine wesentliche Idee der Erfindung besteht daher darin, dass nach einer gefundenen Prozesseinstellung (hier kann beispielsweise ein Luftrecycling durch den Bediener aktiviert werden) der Zwischenblasdruck automatisch variiert wird, um auf diese Weise das Recycling einschwingen zu können. Unter dem Verbrauch des gasförmigen Mediums wird dabei derjenige Anteil des gasförmigen Mediums verstanden, der nicht mehr zurückgeführt bzw. recycelt werden kann. Dabei wäre es möglich, diesen Verbrauch etwa mit einem Durchflussmesser zu bestimmen.

Weiterhin ist es möglich, dass eine vorgegebene Kennzahl, welche beispielsweise für den Luftverbrauch charakteristisch ist, abgespeichert wird. Der Zwischenblasdruck bzw. der zweite Druck, mit dem dann der niedrigste Luftverbrauch generiert wird, kann bevorzugt automatisch übernommen werden.

Vorteilhaft erfolgt wenigstens zeitweise eine Messung des zweiten Druckes und besonders bevorzugt erfolgt ein kontinuierliches Messen wenigstens dieses zweiten Druckes. Weiterhin wäre es auch möglich, auch den ersten und/oder den dritten Druck zu variieren.

Bei einem weiteren bevorzugten Verfahren werden die Kunststoffbehältnisse nach dem Fertigblasen entlastet bzw. wird wiederum Luft aus den Behältnissen entlassen. Bevorzugt wird der Fertigblasdruck für einen vorgegebenen Zeitraum gehalten.

Bevorzugt wird das Druckniveau nach dem Fertigblasen zumindest zeitweise wieder auf einen Zwischenblasdruck abgesenkt. Vorteilhaft liegt der erste Druck bzw. der Vorblasdruck zwischen 2bar und 15bar, bevorzugt zwischen 4bar und 12bar und besonders bevorzugt zwischen 4bar und 10bar. Vorteilhaft liegt der zweite Druck, d.h. der Zwischenblasdruck zwischen 8bar und 40bar, bevorzugt zwischen 12bar und 20bar. Vorteilhaft liegt der dritte Druck zwischen 20bar und 40bar, bevorzugt zwischen 20bar und 35bar. Bei einem weiteren bevorzugten Verfahren kann der zweite Druck bzw. der Zwischenblasdruck in einem Druckbereich variiert werden, der zwischen 3bar und 20bar, bevorzugt zwischen 5bar und 15bar liegt.

Vorteilhaft wird - insbesondere anhand einer Druckkurve - in der Blasmaschine eine Korrelation mit dem Luftverbrauch hergestellt. Je höher ein Druck vor dem Entlasten der Streckblasmaschine bzw. des Behältnisses ist, desto höher ist auch der Luftverbrauch.

Bevorzugt wird daher der zweite Druck in Abhängigkeit von dem Verbrauch des gasförmigen Mediums bestimmt. Bevorzugt ist damit ein Regelkreis vorgesehen, der den zweiten Druck in Abhängigkeit von einem gemessenen Verbrauch einregelt.

Bei einem bevorzugten Verfahren wird die Größe des zweiten Druckes bestimmt, bei der der Verbrauch des gasförmigen Mediums ein Minimum erreicht. Dieser zweite Druck kann für den folgenden Arbeitsbetrieb verwendet werden. Unter einer Variation während eines Arbeitsbetriebes wird ein Betrieb der Maschine verstanden, bei der zumindest probeweise Behältnisse gefertigt werden. Daneben kann es sich jedoch auch um einen speziellen Einlern- bzw. Kalibriermodus der Anlage handeln. Damit bezeichnet der Arbeitsbetrieb auch solche Betriebssituationen, bei denen eine Maschine eingestellt, auf neue Behältnisse umgestellt oder ansonsten eingerichtet wird.

Bei einem weiteren vorteilhaften Verfahren wird ein Verbrauch des zum Umformen des Kunststoffvorformlings nötigen gasförmigen Mediums - insbesondere in Abhängigkeit von dem zweiten Druck - bestimmt. Dabei ist es möglich, dass innerhalb des Regelungsvorganges der Druck variiert wird und in Abhängigkeit von diesem Druck jeweils der Verbrauch an gasförmigem Medium festgestellt wird.

Wie erwähnt wird dabei ein Niveau dieses Luftverbrauches bestimmt. Damit wird, wie oben erwähnt, der Druck in Abhängigkeit von dem Verbrauch geregelt.

Bei einem weiteren vorteilhaften Verfahren wird ein Fertigblasen der Kunststoffbehältnisse eingeleitet, wenn der zweite Druck einen vorgegebenen Grenzwert überschreitet. Es wäre nun möglich, dass sich bei der Einregelung ergibt, dass der Zwischenblasdruck sehr hoch anzusetzen ist. In diesem Falle wird ein Grenzwert festgesetzt, ab welchem in jedem Fall die Fertigblasstufe einsetzt. So kann beispielsweise festgelegt werden, dass bei Erreichen von 95% des Soll-Druckes beim Zwischenblasen automatisch das Fertigblasen aktiviert wird.

Vorteilhaft wird für den zweiten Druck eine Schwellwertumschaltung vorgesehen. Bevorzugt wird also von dem zweiten Druck auf den dritten Druck bei Erreichen eines bestimmten Schwellwertes dieses Zwischenblasdruckes umgeschaltet.

Bei einem weiteren vorteilhaften Verfahren werden die Blasformen bzw. die Behältnisse während der Expansion der Kunststoffvorformlinge entlang eines vorgegebenen Transportpfades transportiert und der zweite Druck wird bevorzugt auch in Abhängigkeit von einer Position dieser Blasformen entlang des Transportpfades gewählt. So ist es beispielsweise möglich, dass ab einer bestimmten Position der Blasformen mittels ihres Transportpfades in jedem Fall eine Umschaltung von dem ersten Druckniveau auf das zweite Druckniveau und/oder vom zweiten Druckniveau auf das dritte Druckniveau erfolgt.

Vorteilhaft werden die Blasformen bzw. die Blasstationen, deren Bestandteil bevorzugt auch die Blasformen sind, entlang eines kreisförmigen Transportpfades transportiert, beispielsweise mittels eines Blasrades. In diesem Falle findet bevorzugt eine Überprüfung der jeweiligen Winkel statt, bei denen die betreffenden Verfahrensschritte eingeleitet werden. So ist es beispielsweise möglich, dass die Zeitspanne bzw. der Winkel, während dessen ein Recyceln stattfindet, nicht weiter vergrößert wird, wenn bereits ein Druckgleichgewicht zwischen dem betreffenden Reservoire und dem restlichen Druck innerhalb des Behältnisses herrscht. Auch wäre es möglich, dass keine weitere Vergrößerung erfolgt, wenn zwar noch kein Druckgleichgewicht herrscht, jedoch annähernd ein Gleichgewicht, beispielsweise sich die Situation um lediglich um 0,5 bar oder weniger von einem Gleichgewicht unterscheidet. Weiterhin wird bevorzugt auch der maximale Prozesswinkel, entlang dessen ein Recycling stattfindet, begrenzt.

Durch das erfindungsgemäße Verfahren ist es möglich, das Zwischenblasen auch für den Benutzer vollständig auszublenden und nur auf Knopfdruck im Rahmen des Recyclings zu optimieren. Auch wäre es möglich, anstatt eines Luftverbrauchsmessgerätes eine Korrelationsgröße anzuzeigen. Als Anzeigeeinrichtung könnte beispielsweise ein Touchscreen verwendet werden.

Die vorliegende Erfindung ist weiterhin auf eine Vorrichtung zum Umformen von Kunststoffvorformlingen zu Kunststoffbehältnissen gerichtet. Diese Vorrichtung weist wenigstens eine Blasform bzw. eine Blasstation auf, innerhalb derer der Kunststoffvorformling durch Beaufschlagung mit einem gasförmigen Medium expandierbar ist. Daneben weist die Vorrichtung eine Beaufschlagungseinrichtung auf, welche den Kunststoffvorformling mit dem gasförmigen Medium beaufschlagt, sowie ein erstes Druckreservoir, welches das gasförmige Medium zum Vorblasen des Kunststoffvorformlings mit einem ersten Druck zur Verfügung stellt, ein zweites Druckreservoir, welches das gasförmige Medium zum Zwischenblasen des Kunststoffvorformlings mit einem zweiten Druck zur Verfügung stellt, wobei der zweite Druck höher ist als der erste Druck und mit einem dritten Druckreservoir, welches das gasförmige Medium zum Fertigblasen des Kunststoffvorformlings mit einem dritten Druck zur Verfügung stellt, wobei der dritte Druck größer ist als der zweite Druck.

Erfindungsgemäß weist die Vorrichtung eine Messeinrichtung auf, welche wenigstens einen Wert bestimmt, der für einen Verbrauch des gasförmigen Mediums charakteristisch ist, sowie eine Steuerungseinrichtung, welche wenigstens den zweiten Druck in Abhängigkeit von dem Verbrauch des gasförmigen Mediums steuert bzw. ändert.

Vorteilhaft handelt es sich bei dieser Steuerungseinrichtung um eine Regelungseinrichtung, welche eine Regelung des zweiten Druckes in Abhängigkeit von dem Verbrauch des gasförmigen Mediums durchführt.

Vorteilhaft weist die Vorrichtung einen Träger auf, an dem eine Vielzahl von derartigen Blasformen angeordnet ist. Vorteilhaft ist dieser Träger als Blasrad ausgeführt und an diesem ist eine Vielzahl von Blasstationen angeordnet. Die Blasformen sind dabei bevorzugt Bestandteile dieser Blasstation. Vorteilhaft weisen die einzelnen Blasstationen auch Reckstangen auf, welche die Behältnisse während ihrer Expansion in ihrer Längsrichtung dehnen.

Dabei ist es auch möglich, dass eine Bewegung dieser Reckstangen in Abhängigkeit von den oben erwähnten Druckniveaus und/oder in Abhängigkeit von dem Verbrauch des gasförmigen Mediums bzw. der Druckluft verändert wird. Auch hier wäre eine Regelung möglich, so dass auch umgekehrt eine Bewegung der Reckstange bei der Einstellung der Druckniveaus berücksichtigt wird.

Bei einer weiteren vorteilhaften Ausführungsform weist die Vorrichtung wenigstens eine Ventileinrichtung auf, welche zwischen wenigstens einem Druckreservoire und der Beaufschlagungseinrichtung angeordnet ist und die Zufuhr des gasförmigen Mediums an die Kunststoffvorformlinge steuert.

Bei der Beaufschlagungseinrichtung kann es sich beispielsweise um eine Blasdüse handeln, welche vor der Expansion bevorzugt an eine Mündung der Kunststoffvorformlinge angelegt wird.

Vorteilhaft ist eine Vielzahl von Ventilen vorgesehen, welche die Druckzufuhr, insbesondere auch unter verschiedenen Druckniveaus, steuert. Zu diesem Zweck kann jede einzelne Blasstation der Vorrichtung einen Ventilblock aufweisen, der wiederum diese Vielzahl von Ventilen aufweist.

Bei einer weiteren vorteilhaften Ausführungsform ist wenigstens ein Anteil des gasförmigen Mediums von den Kunststoffbehältnissen in wenigstens in ein Druckreservoir rückführbar bzw. wird zurückgeführt. So wäre es möglich, beispielsweise nach dem Fertigblasen wieder Druckluft zurück in das zweite und das erste Reservoir, welche unter einem geringeren Druck stehen, zuzulassen.

Vorteilhaft ist wenigstens ein Druckreservoir als Ringleitung ausgeführt, welche eine Vielzahl von Blasstationen bzw. Umformungsstationen mit Druckluft versorgt.

Vorteilhaft weisen dabei diese einzelnen Umformungsstationen jeweils die hier bezeichnete Blasform auf, daneben bevorzugt jedoch auch noch andere Bestandteile, wie beispielsweise Blasformhalter, die zum Öffnen und Schließen auseinander- bzw. zusammengeklappt werden können. Daneben weisen diese Umformungsstationen bevorzugt auch noch jeweils Reckstangen zum Dehnen der Kunststoffvorformlinge auf.

Bei einer weiteren vorteilhaften Ausführungsform weist die Vorrichtung insbesondere pro Blasstation auch noch Auslässe auf, über welche Druckluft an die Umgebung ausgelassen werden kann. Im Bereich dieses Auslasses kann dabei zusätzlich auch ein Schalldämpfer vorgesehen sein.

Vorteilhaft ist eine Messeinrichtung zum Messen eines Luftverbrauchs in Strömungsverbindung mit einer der besagten Auslassleitungen, über welche Druckluft an die Umgebung ausgelassen werden kann.

Vorteilhaft weist die Vorrichtung auch eine oder mehrere Druckmesseinrichtungen auf, die jeweils die zum Expandieren der Behältnisse verwendeten Drücke misst. Eine Prozessoreinrichtung steuert bevorzugt auch die Druckniveaus in Abhängigkeit von diesen gemessenen Drücken.

Weitere Vorteile und Ausführungsformen ergeben sich aus den beigefügten Zeichnungen:
Darin zeigen:
   - Fig. 1: eine schematische Darstellung einer erfindungsgemäßen Vorrichtung zum Umformen von Kunststoffvorformlingen zu Kunststoffbehältnissen; und
   - Fig. 2: eine Darstellung eines Kurvenverlaufes für eine Druckluftbeaufschlagung.

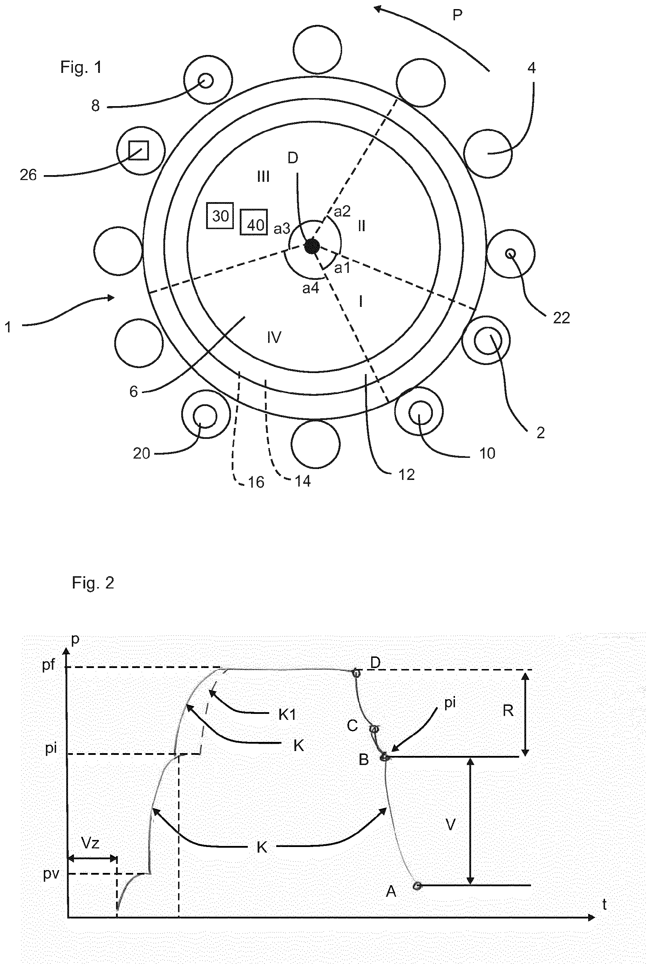

Figur 1 zeigt grob schematisch eine erfindungsgemäße Vorrichtung 1 zum Umformen von Kunststoffvorformlingen 10 zu Kunststoffbehältnissen 20. Dabei werden beispielsweise über einen (nicht gezeigten) Zuführstern Kunststoffvorformlinge 10 der Vorrichtung 1 zugeführt und diese zu Kunststoffbehältnissen 20 umgeformt, währenddessen die Kunststoffvorformlinge entlang eines Transportpfades P bewegt werden. Die Vorrichtung 1 weist dabei einen in seiner Gesamtheit mit 6 bezeichneten Träger auf, der um eine Drehachse D drehbar ist und an dem eine Vielzahl von Blasstationen 4 angeordnet ist. Diese Blasstationen sind dabei äquidistant angeordnet. Jede einzelne Blasstation 4 weist dabei auch eine Blasform 2 auf, die geöffnet und geschlossen werden kann und in deren Innerem ein Hohlraum ausgebildet wird, innerhalb dessen die Kunststoffvorformlinge 10 zu den Kunststoffbehältnissen 20 expandiert werden.

Das Bezugszeichen 22 kennzeichnet grob schematisch eine Reckstange, welche zum Dehnen der Kunststoffvorformlinge entlang ihrer Längsrichtung, welche hier senkrecht zur Figurenebene verläuft, dehnt.

Das Bezugszeichen 12 kennzeichnet ein erstes Druckreservoir, welches hier als Ringkanal ausgeführt ist. Diesem Druckreservoir 12 kann beispielsweise über einen (nicht gezeigten) Kompressor von außen her Druckluft zugeführt werden.

Dieses Druckluftreservoir 12 steht über eine nicht gezeigte Verbindungsleitung in Verbindung mit den einzelnen Blasstationen 4 und führt ihnen auf diese Weise Druckluft zu. Weiterhin sind neben dem Druckluftreservoir 12 noch ein zweites Druckluftreservoir 14 und ein drittes Druckluftreservoir 16 vorgesehen, die hier jedoch nicht sichtbar sind, da sie unterhalb des Druckluftreservoirs 12 liegen. Auch das zweite Druckluftreservoir 14 und das dritte Druckluftreservoir 16 werden von einem Kompressor zumindest mittelbar versorgt und stehen ebenfalls in Strömungsverbindung mit den einzelnen Blasstationen bzw. Umformungsstationen 4.

Das Bezugszeichen 8 kennzeichnet eine Beaufschlagungseinrichtung, welche die Kunststoffvorformlinge mit der Druckluft zu deren Expansion beaufschlagt. Es wird darauf hingewiesen, dass hier nur aus Gründen der Übersichtlichkeit nur eine Beaufschlagungseinrichtung 8 dargestellt ist, jedoch jede Blasstation über eine derartige Beaufschlagungseinrichtung 8 und auch über eine Reckstange 22 sowie auch über die Blasform 2 verfügt.

Die Bezugszeichen I - IV bezeichnen unterschiedliche Abschnitte eines Blasvorganges. Dabei wird zunächst in einem Abschnitt I ein Vorblasen der Kunststoffvorformlinge bewirkt, in einem Abschnitt II ein Zwischenblasen und in einem Abschnitt III ein Fertigblasen. Dieser Abschnitt III ist zeitlich der längste Abschnitt. In einem Abschnitt IV findet ein Entlasten statt, wobei wieder Druckluft aus den Kunststoffbehältnissen entweichen kann und diese schließlich aus den Blasformen entnommen werden können.

Das Bezugszeichen 30 kennzeichnet grob schematisch eine Verbrauchsmesseinrichtung, welche die Menge der verbrauchten Blasluft bestimmt. Dabei wäre es möglich, dass jede einzelne Blasstation eine derartige Verbrauchsmesseinrichtung aufweist. Es wäre jedoch auch möglich, dass eine zentrale Verbrauchsmesseinrichtung vorgesehen ist, welche den gesamten Verbrauch an Luft, bezogen auf alle Blasstationen misst.

Das Bezugszeichen 40 bezeichnet eine Steuerungseinrichtung bzw. eine Regelungseinrichtung, welche den Zwischenblasdruck pi in Abhängigkeit von dem gemessenen Luftverbrauch bestimmt. Das Bezugszeichen 26 kennzeichnet eine Ventileinrichtung, welche ebenfalls an jeder einzelnen Blasstation vorhanden ist und welche bevorzugt eine Vielzahl von Ventilen aufweist, welche die Zufuhr des gasförmigen Mediums bzw. der Blasluft an die einzelnen Beaufschlagungseinrichtungen bzw. die einzelnen Kunststoffvorformlinge 10 steuert. Diese Ventileinrichtung kann dabei als Ventilblock mit einer Vielzahl von Ventilen ausgeführt sein.

Figur 2 zeigt einen Verlauf einer Druckkurve K. Dabei ist ein Druck pv, nämlich der Vorblasdruck, gezeigt, ein Druck pi (der Zwischenblasdruck, d.h. der oben erwähnte zweite Druck), sowie ein Druck pf, d.h. der Fertigblasdruck. Das Bezugszeichen V kennzeichnet den Luftverbrauch, der durch den Abstand zwischen pv und pi gegeben ist. Das Bezugszeichen R kennzeichnet die Luft bzw. Druckmenge, die recycelt werden kann, indem die aus den jeweiligen Behältnissen wieder entlassene Luft in die jeweiligen Druckkanäle bzw. Reservoirs 12, 14 mit dem geringeren Druckluftniveau zurückgeführt wird.

Man erkennt, dass die Menge des Luftverbrauchs und auch die Menge der recycelten Luft im Wesentlichen von der Größe des Druckes pi in dem Punkt B abhängen. In dem Punkt C ist ein höheres Druckniveau des Druckes pi dargestellt, was damit zu einem höheren Luftverbrauch und einer geringeren recycelbaren Druckluftmenge führt.

Die Erfindung schlägt nunmehr vor, dass dieser Druck pi automatisch unter Berücksichtigung des Luftverbrauches eingestellt wird. Bei bisherigen Maschinen wurde dieses Druckniveau pi durch den Maschinenbenutzer vorgegeben. Hier wird in einer Eingabeeinrichtung die entsprechende Eingabe ausgeblendet, d.h. diese kann von dem Benutzer nicht vorgenommen werden. Der Punkt D bezeichnet den Punkt, ab dem wieder damit begonnen wird, Luft aus den Behältnissen zu entlassen, da der Umformungsvorgang abgeschlossen ist.

Es wäre jedoch auch möglich, dass durch den Benutzer ein Anfangswert pi vorgegeben wird und dieser dann automatisch eingeregelt wird. Dabei findet jedoch bevorzugt auch eine Berücksichtigung der jeweiligen Winkel a1 - a4, die in Figur 1 durch die Abschnitte I - IV bestimmen sind, statt. Falls ein entsprechender Recyclingwinkel zu groß ist, d.h. andererseits pi zu niedrig gewählt wird, sorgt die Steuerungseinrichtung dafür, dass der Recyclingwinkel bzw. der Stoppwinkel (d.h. der Winkel, bei dem das Recyclen beendet wird) nicht weiter vergrößert wird. Vorteilhaft ist, wie oben erwähnt, eine Schwellwertumschaltung vorhanden, die zumindest bei Erreichen eines bestimmten Schwellwertes das jeweils folgende Druckniveau aktiviert. Weiterhin wäre es möglich, dass die Zeit bzw. der Winkel eingestellt wird, ab dem mit dem Fertigblasen bzw. dem Beaufschlagen der Behältnisse mit dem Druck pf begonnen wird. Dies ist durch den gestrichelt dargestellten Kurvenabschnitt K1 veranschaulicht.

Die Steuerung variiert nun gezielt den pi-Druck und lässt ein Recycling einschwingen, wobei ermittelt wird, wann am meisten Luft recycelt werden kann. Mit anderen Worten kann der Verlauf eines Luftauflassers überprüft werden und wenn dieser minimal ist, ergibt sich hieraus der ideale Luftverbrauch. Vorteilhaft findet jedoch noch eine Plausibilitätsprüfung anhand des sich jeweils ergebenden Recyclingwinkels statt.

Falls beispielsweise der Blaskurvendruck unter den Druck pi im Vorblaskanal fällt, gegebenenfalls unter diesem Druck zzgl. eines vorgegebenen Differenzwertes, der bevorzugt zwischen 0,3 bar und 0,7 bar liegt, oder wenn der Blaskurvendruck unter den Druck des pi - Ringkanals, d.h. des zweiten Reservoirs 14 (ebenfalls eventuell zzgl. eines vorgegebenen Wertes, der zwischen 0,3bar und 0,7bar, bevorzugt bei etwa 0,5 bar liegt) fällt, dann wird der jeweilige Recyclingwinkel nicht weiter vergrößert.

Bevorzugt ist es auch möglich, einen Vorschlagswert für den zweiten Druck pi auszugeben oder auch entsprechend einen Vorschlag für den jeweiligen Winkel, wie sie in Figur 1 dargestellt sind bzw. den Recyclingwinkel des Druckes pi.

Weiterhin ist es auch möglich, dass der Beginnpunkt für das Recyceln, d.h. hier der zeitliche Wert des Punktes D auf den Wert des maximalen Recycelns R gesetzt wird, gegebenenfalls unter Abzug eines bestimmten Gradbereiches, wie etwa 1° - 3° und bevorzugt 2°.

Weiterhin wäre es möglich, dass der Druck in dem Vorblaskanal, d.h. im ersten Reservoir 12 mit dem Druck in dem Punkt B verglichen wird bzw. der Druck in dem zweiten Reservoir bzw. dem Ringkanal, d.h. dem zweiten Druck PI mit dem Druck in Punkt C. Wenn die Differenz kleiner als 0,5 bar ist, wird der entsprechende Recyclingwinkel nicht weiter vergrößert, da auch diese Weise keine stark verbesserte Einsparung mehr zu erwarten ist.

Damit kennzeichnet der Punkt B den optimierten Zwischendruck PI, an dem ein maximales Recycling möglich ist. Diese Anpassung des Druckes pi findet damit, wie oben erwähnt, im Laufe eines Arbeitsbetriebes, gegebenenfalls auch eines Kalibrierbetriebes, statt. Unterhalb des Druckes pv (bzw. ab dem Punkt A) ist das Behältnis wieder vollständig entlastet und kann den einzelnen Blasstationen 4 entnommen werden. Das Bezugszeichen Vz kennzeichnet die Verzögerungszeit der Ventile.

### Bezugszeichenliste

- 1: Vorrichtung
- 2: Blasform
- 4: Blasstation
- 6: Träger
- 8: Beaufschlagungseinrichtung
- 10: Kunststoffvorformlinge
- 12: erstes Druckreservoir
- 14: zweites Druckreservoir
- 16: drittes Druckreservoir
- 22: Reckstange
- 26: Ventileinrichtung
- P: Transportpfad
- pv: erster Druck, Vorblasdruck
- pi: zweiter Druck, Zwischenblasdruck
- pf: dritter Druck, Fertigblasdruck
- A, B, C, D: Verfahrenspunkte
- I, II, III, IV: Verfahrensabschnitte
- a1, a2, a3, a4: Winkel
- D: Drehachse
- t: Zeit
- p: Druck
- K: Blaskurve
- K1: Kurvenabschnitt
- Vz: Verzögerungszeit

## Patentansprüche

1. Verfahren zum Umformen von Kunststoffvorformlingen (10) zu Kunststoffflaschen (20), wobei die Kunststoffvorformlinge in eine Blasform (2) eingebracht werden und durch Beauschlagung mit einem gasförmigen Medium in der Blasform (2) zu den Kunststoffflaschen (20) expandiert werden mit den Schritten:
- Vorblasen durch Beaufschlagen der Kunststoffvorformlinge (10) mit einem ersten Druck (pv)
- Zwischenblasen der Kunststoffvorformlinge (10) mit einem zweiten Druck (pi), der höher ist als der erste Druck (pv)
- Fertigblasen der Kunststoffvorformlinge (10) mit einem dritten Druck (pf), der höher ist als der zweite Druck (pi)
**dadurch gekennzeichnet, dass**
der zweite Druck (pi) während eines Arbeitsbetriebs wenigstens in Abhängigkeit von einem Verbrauch des zum Umformen der Kunststoffvorformlinge (10) nötigen gasförmigen Mediums, geregelt wird, wobei nach einer gefundenen Prozesseinstellung der zweite Druck (pi) automatisch variiert wird, um auf diese Weise ein Recycling einschwingen zu können, und wobei unter einem Verbrauch des gasförmigen Mediums derjenige Anteil des gasförmigen Mediums verstanden wird, der nicht mehr zurückgeführt werden kann.

2. Verfahren nach Anspruch 1,
**dadurch gekennzeichnet, dass**
der Verbrauch des zum Umformen der Kunststoffvorformlinge (10) nötigen gasförmigen Mediums bestimmt wird.

3. Verfahren nach Anspruch 2,
**dadurch gekennzeichnet, dass**
der zweite Druck (pi) in Abhängigkeit von dem Verbrauch des gasförmigen Mediums bestimmt wird.

4. Verfahren nach Anspruch 3,
**dadurch gekennzeichnet, dass**
die Größe des zweiten Drucks (pi) bestimmt wird, bei der der Verbrauch des gasförmigen Mediums ein Minimum erreicht.

5. Verfahren nach wenigstens einem der vorangegangenen Ansprüche,
**dadurch gekennzeichnet, dass**
ein Verbrauch des zum Umformen der Kunststoffvorformlinge (10) nötigen gasförmigen Mediums in Abhängigkeit von dem zweiten Druck (pi) bestimmt wird.

6. Verfahren nach wenigstens einem der vorangegangenen Ansprüche,
**dadurch gekennzeichnet, dass**
das Fertigblasen der Kunststoffbehältnisse eingeleitet wird, wenn der zweite Druck einen vorgegebenen Grenzwert überschreitet.

7. Verfahren nach Anspruch 1,
**dadurch gekennzeichnet, dass**
die Blasformen (2) während der Expansion der Kunststoffvorformlinge (10) entlang eines vorgegebenen Transportpfads (P) transportiert werden und der zweite Druck (pi) bevorzugt auch in Abhängigkeit von einer Position der Blasformen (2) entlang dieses Transportpfads (P) gewählt wird.

8. Vorrichtung (1) zum Umformen von Kunststoffvorformlingen (10) zu Kunststoffbehältnissen (20) mit wenigstens einer Blasform (2), innerhalb derer der Kunststoffvorformlinge (10) durch Beaufschlagung mit einem gasförmigen Medium expandierbar ist, mit einer Beaufschlagungseinrichtung (8), welche die Kunststoffvorformlinge mit dem gasförmigen Medium beaufschlagt, mit einem ersten Druckreservoir (12), welches das gasförmige Medium zum Vorblasen des Kunststoffvorformlings (10) mit einem ersten Druck (pv) zur Verfügung stellt, mit einem zweiten Druckreservoir (14), welches das gasförmige Medium zum Zwischenblasen des Kunststoffvorformlings (10) mit einem zweiten Druck (pi) zur Verfügung stellt, wobei der zweite Druck (pi) höher ist als der erste Druck (pv) und mit einem dritten Druckreservoir (16), welches das gasförmige Medium zum Fertigblasen des Kunststoffvorformlings (10) mit einem dritten Druck (pf) zur Verfügung stellt, wobei der dritte Druck (pf) größer ist als der zweite Druck (pi),
**dadurch gekennzeichnet, dass**
die Vorrichtung (1) eine Messeinrichtung (30) aufweist, welche wenigstens einen Wert bestimmt, der für einen Verbrauch des gasförmigen Mediums charakteristisch ist sowie eine Steuerungseinrichtung (40), welche dazu eingerichtet und dafür vorgesehen ist
- den zweiten Druck (pi) während eines Arbeitsbetriebs in Abhängigkeit von einem Verbrauch, zu regeln, wobei
- nach einer gefundenen Prozesseinstellung den zweite Druck (pi) automatisch variiert wird, um auf diese Weise ein Recycling einschwingen zu können, und wobei unter einem Verbrauch des gasförmigen Mediums derjenige Anteil des gasförmigen Mediums verstanden wird, der nicht mehr zurückgeführt werden kann.

9. Vorrichtung nach Anspruch 8,
**dadurch gekennzeichnet, dass**
die Vorrichtung wenigstens eine Ventileinrichtung (26) aufweist, welche zwischen wenigstens einem Druckreservoir (12, 14, 16) und der Beaufschlagungseinrichtung (8) angeordnet ist und welche die Zufuhr des gasförmigen Mediums an die Kunststoffvorformlinge (10) steuert.

10. Vorrichtung nach Anspruch 8,
**dadurch gekennzeichnet, dass**
wenigstens ein Anteil des gasförmigen Mediums von den Kunststoffbehältnissen (10) in wenigstens ein Druckreservoir (12, 14, 16) rückführbar ist.

## Claims

1. Method for shaping plastics material pre-forms (10) into plastics material containers (20), wherein the plastics material pre-forms (10) are introduced into a blow mould (2) and are expanded to form the plastic bottles (20) by being acted upon with a gaseous medium in the blow mould (2), with the steps:
- preliminary blow moulding by acting upon the plastics material preforms (10) with a first pressure (pv)
- intermediate blow moulding of the plastics material pre-forms (10) at a second pressure (pi) which is higher than the first pressure (pv)
- inal blow moulding of the plastics material pre-forms (10) at a third pressure (pf) which is higher than the second pressure (pi),
**characterized in that**
the second pressure (pi) is regulated during a working operation at least in a manner dependent upon a consumption of the gaseous medium which is necessary for the shaping of the plastic preforms (10), wherein after finding a process adjustment the second pressure (pi) is automatically varied in order to be able to recycle in this way, and wherein under a consumption of the gaseous medium is understood the portion of the gaseous medium which can no longer be recycled.

2. A method according to claim 1,
**characterized in that**
the consumption of the gaseous medium required for shaping the plastics material pre-form (10) is determined.

3. A method according to claim 2,
**characterized in that**
the second pressure (pi) is determined in a manner dependent upon the consumption of the gaseous medium.

4. A method according to claim 3,
**characterized in that**
the level of the second pressure (pi) is determined in which the consumption of the gaseous medium reaches a minimum.

5. A method according to at least one of the preceding claims,
**characterized in that**
the consumption of the gaseous medium required for shaping the plastics material pre-forms (10) is determined in a manner dependent upon the second pressure (pi).

6. A method according to at least one of the preceding claims,
**characterized in that**
the final blow moulding of the plastics material containers is initiated when the second pressure exceeds a pre-set threshold value.

7. A method according to claim 1,
**characterized in that**
the blow moulds (2) are conveyed along a pre-set conveying path (P) during the expansion of the plastics material pre-forms (10) and the second pressure (pi) is preferably also selected in a manner dependent upon a position of the blow moulds (2) along this conveying path (P).

8. Apparatus (1) for shaping plastics material pre-forms (10) into plastics material containers (20) with at least one blow mould (2), inside which the plastics material pre-form (10) is capable of being expanded by being acted upon with a gaseous medium, with a stressing device (8) which acts upon the plastics material pre-forms with the gaseous medium, with a first pressure reservoir (12) which provides the gaseous medium for the preliminary blow moulding of the plastics material pre-form (10) at a first pressure (pv), with a second pressure reservoir (14) which provides the gaseous medium for the intermediate blow moulding of the plastics material pre-form (10) at a second pressure (pi), wherein the second pressure (pi) is higher than the first pressure (pv), and with a third pressure reservoir (16) which provides the gaseous medium for the final blow moulding of the plastics material pre-form (10) at a third pressure (pf), wherein the third pressure (pf) is higher than the second pressure (pi),
**characterized in that**
the apparatus (1) has a measuring instrument (30) which determines at least one value which is characteristic of the consumption of the gaseous medium, and a control device (40) which is established and provided
- to change at least the second pressure (pi) in a manner dependent upon the consumption of the gaseous medium, wherein
- after finding a process adjustment the second pressure (pi) is automatically varied in order to be able to recycle in this way, and wherein under a consumption of the gaseous mediums is understood the portion of the gaseous medium which can no longer be recycled.

9. An apparatus according to claim 8,
**characterized in that**
the apparatus has at least one valve device (26) which is arranged between at least one pressure reservoir (12, 14, 16) and the stressing device (8) and which controls the supply of the gaseous medium to the plastics material pre-forms (10).

10. An apparatus according to claim 8,
**characterized in that**
at least part of the gaseous medium is capable of being fed back from the plastics material containers (10) into at least one pressure reservoir (12, 14, 16).

## Revendications

1. Procédé de transformation d'ébauches en matière plastique (10) en récipients en matière plastique (20), dans lequel les ébauches en matière plastique étant introduites dans un moule de soufflage (2) et étant expansées de manière à obtenir des récipients en matière plastique (20) par application d'un milieu gazeux dans le moule de soufflage (2), le procédé comprenant les étapes :
- de pré-soufflage des ébauches en matière plastique (10) en appliquant avec une première pression (pv)
- de soufflage intermédiaire des ébauches en matière plastique (10) avec une deuxième pression (pi) qui est supérieure à la première pression (pv)
- de soufflage final des ébauches en matière plastique (10) avec une troisième pression (pf) qui est supérieure à la deuxième pression (pi)
**caractérisé en ce que**
la deuxième pression (pi) est régulée pendant un mode de travail au moins en fonction d'une consommation du milieu gazeux nécessaire à la transformation des ébauches en matière plastique (10), dans lequel la deuxième pression (pi) est modifiée automatiquement après un réglage de processus qui a déjà été fait, afin de pouvoir provoquer de cette manière un recyclage, et sachant qu'on entend par consommation du milieu gazeux la part de milieu gazeux qui ne peut plus être réintroduite.

2. Procédé selon la revendication 1,
**caractérisé en ce que**
la consommation du milieu gazeux nécessaire pour transformer les ébauches en matière plastique (10) est déterminée.

3. Procédé selon la revendication 2,
**caractérisé en ce que**
la deuxième pression (pi) est déterminée en fonction de la consommation du milieu gazeux.

4. Procédé selon la revendication 3,
**caractérisé en ce que**
le niveau de la deuxième pression (pi) est déterminé lorsque la consommation du milieu gazeux atteint un minimum.

5. Procédé selon au moins l'une des revendications précédentes, **caractérisé en ce que**
une consommation du milieu gazeux nécessaire pour transformer les ébauches en matière plastique (10) est déterminée en fonction de la deuxième pression (pi).

6. Procédé selon au moins l'une des revendications précédentes, **caractérisé en ce que**
le soufflage final des récipients en matière plastique est déclenché lorsque la deuxième pression dépasse une valeur limite prédéfinie.

7. Procédé selon la revendication 1,
**caractérisé en ce que**
les moules de soufflage (2) sont transportés le long d'un trajet de transport (P) prédéfini pendant l'expansion des ébauches en matière plastique (10) et la deuxième pression (pi) est choisie de préférence également en fonction d'une position des moules de soufflage (2) le long de ce trajet de transport (P).

8. Dispositif (1) de transformation d'ébauches en matière plastique (10) en récipients en matière plastique (20), comprenant au moins un moule de soufflage (2) à l'intérieur duquel les ébauches en matière plastique (10) pouvant être expansées par application d'un milieu gazeux, un dispositif d'exposition (8), lequel expose les ébauches en matière plastique au milieu gazeux, un premier réservoir de pression (12), lequel fournit le milieu gazeux servant au pré-soufflage de l'ébauche en matière plastique (10) avec une première pression (pv), un deuxième réservoir de pression (14), lequel fournit le milieu gazeux servant au soufflage intermédiaire de l'ébauche en matière plastique (10) avec une deuxième pression (pi), dans lequel la deuxième pression (pi) étant supérieure à la première pression (pv), et un troisième réservoir de pression (16), lequel fournit le milieu gazeux servant au soufflage final de l'ébauche en matière plastique (10) avec une troisième pression (pf), dans lequel la troisième pression (pf) étant supérieure à la deuxième pression (pi), **caractérisé en ce que**
le dispositif (1) comprend un système de mesure (30), lequel détermine au moins une valeur qui est caractéristique d'une consommation du milieu gazeux, ainsi qu'un système de commande (40), lequel est configuré et conçu
- pour réguler la deuxième pression (pi) pendant un mode de travail en fonction d'une consommation, dans lequel
- la deuxième pression (pi) est modifiée automatiquement après un réglage de processus qui a déjà été fait, afin de pouvoir provoquer de cette façon un recyclage, et sachant qu'on entend par consommation du milieu gazeux la part du milieu gazeux qui ne peut plus être réintroduite.

9. Dispositif selon la revendication 8,
**caractérisé en ce que**
le dispositif comprend au moins un système de soupape (26), lequel est agencé entre au moins un réservoir de pression (12, 14, 16) et le dispositif d'exposition (8) et lequel commande l'amenée du milieu gazeux aux ébauches en matière plastique (10).

10. Dispositif selon la revendication 8,
**caractérisé en ce que**
au moins une partie du milieu gazeux des récipients en matière plastique (10) peut être réintroduite dans au moins un réservoir de pression (12, 14, 16).
